(19) Europäisches Patentamt
European Patent Office
Office européen des brevets

(11) Publication number: **0 065 603**
**B1**

# (12) EUROPEAN PATENT SPECIFICATION

(45) Date of publication of patent specification: **08.01.86**

(21) Application number: **81304783.4**

(22) Date of filing: **14.10.81**

(51) Int. Cl.⁴: **C 09 J 3/14,** C 08 L 9/06, C 08 F 236/06, C 08 F 236/08, C 08 L 57/02, C 08 L 91/00, C 08 K 5/09

## (54) An adhesive composition.

(30) Priority: **14.10.80 US 196213**

(43) Date of publication of application: **01.12.82 Bulletin 82/48**

(45) Publication of the grant of the patent: **08.01.86 Bulletin 86/02**

(84) Designated Contracting States: **BE DE FR GB IT NL**

(56) References cited:

**None**

(73) Proprietor: **Exxon Research and Engineering Company**
**P.O.Box 390 180 Park Avenue**
**Florham Park New Jersey 07932 (US)**

(72) Inventor: **Lundberg, Robert Dean**
**4 Brian Drive**
**Bridgewater New Jersey (US)**
Inventor: **Agarwal, Pawan Kumar**
**237 Delaware Street**
**Westfield New Jersey (US)**
Inventor: **Weiss, Robert Alan**
**61 Charles Lane**
**Storrs Connecticut (US)**

(74) Representative: **Field, Roger Norton et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to adhesive compositions.

The present invention relates to a unique and novel adhesive composition which comprises a certain neutralized sulfonated co- or terpolymer and a hydrocarbon resin, to which compositions can optionally be added an ionic preferential plasticizer oil, and/or a filler thereby modifying the rheological and physical properties of the adhesive compositions.

Several U.S. Patents have described sulfonated polymers such as sulfonated Butyl and sulfonated EPDM in adhesive applications (e.g., U.S. 3,867,247 and U.S. 3,801,531). It is important to distinguish the present invention over those and other prior art systems. The U.S. patent 3,867,247 is directed at a sulfonated Butyl cement which is solvent based and is employed to laminate various substrates. It is important to note that the present invention differs from that patent as follows:

(a) the invention is directed to sulfonated copolymers formed by a copolymerization process whereas U.S. 3,867,247 deals with sulfonated Butyl rubber, which was formed by sulfonation of the Butyl rubber and

(b) the copolymers used in the present invention are chemically different from those of the patents above giving rise to different properties and capabilities.

Also the present invention may optionally include a preferential plasticizer capable of associating with the metal sulfonate groups and thereby reducing the melt viscosity of the resulting blends to make the systems more processable.

A. Sulfonated copolymer and process for forming

The neutralized sulfonated co- or terpolymers used in this present invention are formed by a copolymerization process.

The (normally solid) sulfonated copolymer of the present invention comprises at least 80% by weight of at least one conjugated diene having from 4 to 10 carbon atoms per molecule and a minor proportion of a metal or amine neutralized sulfonate monomer, hereafter defined. The copolymer is water insoluble having 0.2 weight percent sulfur to 3 weight percent sulfur, chemically combined.

The present invention involves the use of sulfonate containing copolymers which are preferably formed by a free radical copolymerization process. The monomers used in the free radical emulsion copolymerization process are conjugated dienes which are copolymerized with sulfonate containing monomers.

In general, the conjugated diene and sulfonate containing monomer are dispersed in a water phase in the presence of an initiator which is preferably soluble in the conjugated diene phase and a suitable surfactant, wherein the temperature is sufficient to initiate polymerization. The resultant latex is coagulated usually by the addition of an aqueous salt solution and the recovered co- or terpolymer is washed with water and subsequently dried under vacuum at room temperature.

The copolymers formed from the free radical emulsion copolymerization process can be generally described as having an $\overline{M}n$ of 5,000 to 200,000 more preferably 10,000 to 100,000. The copolymers of the present invention contain 0.2 to 3 weight %, preferably 0.5 to 3, more preferably 0.6 to 3 and most preferably 0.7 to 2.0 weight % of chemically combined sulphur. Typical, but non-limiting examples of the copolymers which can be formed by the free radical emulsion copolymerization process are: butadiene/sodium styrene sulfonate copolymer, isoprene/sodium sulfonate styrene copolymer, butadiene/sodium vinyl sulfonate, isoprene/sodium vinyl sulfonate copolymer. Obviously, an infinite number of copolymers (which term includes terpolymers) can be formed by the free radical copolymerization of any conjugated diene as so defined herein with any sulfonate containing monomer as is defined herein. Terpolymers with styrene, acrylonitrile or vinyl chloride as the termonomer (third monomer) with the aforementioned dienes are also contemplated provided that no more than 10 weight percent of the termonomer is combined therein.

Conjugated dienes

The conjugated dienes are generally defined as acyclic conjugated dienes containing from about 4 to about 10 carbon atoms per molecule more preferably about 4 to about 6 carbon atoms. Typical examples of acyclic conjugated dienes are piperidene, 1,3-butadiene, isoprene (2-methyl-1,3-butadiene), 2,3-dimethyl-1,3-butadiene, 1,3-pentadiene, 2-methyl-1,3,-pentadiene, 2,3-dimethyl-1,3-pentadiene, 3-methyl-1,3-pentadiene, 2-phenyl butadiene, chloroprene and piperidene. Typical examples of cyclic conjugated dienes are cyclopentadiene and methyl cyclopentadiene. The preferred conjugated dienes are 1,3-butadiene, isoprene and chloroprene. In the formation of the sulfonate containing copolymer, one copolymerizes one of the aforementioned conjugated dienes with the sulfonate containing monomer. Sulfonate containing terpolymers can be readily formed by copolymerizing the sulfonate containing monomer with a mixture of two of the above identified conjugated dienes. Other suitable monomers which can be copolymerized with a sulfonate containing monomer (and a conjugated diene as defined) are styrene, butadiene styrene, ethylene, vinyl chloride, vinyl acetate and methylacrylate and mixtures thereof.

Sulfonate containing monomers

The sulfonate containing monomers which are water soluble can be generally described as a monomer

having unsaturation and a metal or amine sulfonate group. The metal or amine neutralized sulfonate monomer is characterized by the formula:

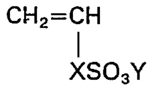

where X is $(CH_2)_n$, where n=0, 1, 2, 3, 4 or aromatic and Y is a cation selected from Groups IA, IIA, IB and IIB of the Periodic Table or an amine of the formula:

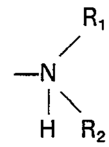

where $R_1$ and $R_2$ are the same or different aliphatic groups of $C_1$ to $C_{12}$ or hydrogen. Particularly suitable metal cations are sodium, potassium, and zinc, and an especially preferred metal cation is sodium. Typical examples of suitable sulfonate containing monomers are:

1) $CH_2=CHSO_3^-Na^+$ sodium vinyl sulfonate
2) $CH_2=CHCH_2SO_3^-Na^+$ sodium allyl sulfonate
3) $CH_2=CH$ 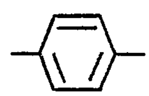 $SO_3^-Na^+$ sodium styrene sulfonate

An especially preferred sulfonate containing monomer is sodium sulfonate styrene. The molar ratio of sulfonate containing monomer to conjugated diene is preferably 1/200 to 1.5.

The redox emulsion polymerization recipe used in this invention is effective in initiating the copolymerization of water-insoluble and water-soluble comonomers in an emulsion system. Because the peroxide initiator is dissolved in the monomer and the redox activator is dissolved in the water, the surface of the micelle/growing polymer particle is believed to be the locus of formation of initiator molecules as well as the polymerization locus. Water phase homopolymerization of the polar, water-soluble monomer is effectively depressed because of low primary radical concentration in the aqueous phase. However other initiators are also contemplated for preparation of these systems.

A variety of free radical catalysts can be employed. This includes a preferential class of free radical initiators such as benzoyl peroxide, cumene peroxide, t-butyl hydroperoxide and similar systems which will be preferentially soluble in the monomer phase as opposed to the aqueous phase. There are a large number of such peroxides used in the art and those having the appropriate solubility behavior and suitable decomposition temperatures in the presence of the reducing agents are satisfactory for the purposes of this invention. Water soluble initiators may also be employed, although the characteristics of the products may be different.

The surfactants employed for this process are varied and well known in the art. The typical emulsifiers or surfactants can be employed, however, some are more effective than others in generating latexes of better stability. A preferred emulsifier is sodium lauryl sulfate.

The buffering agents employed in the polymerization process include sodium carbonate, ammonia, sodium acetate, trisodium phosphate etc. These buffering agents are employed at a concentration of 0.1 to 5 grams/100 grams water employed in the emulsion system.

Chain transfer agents can be readily employed in the polymerization process for controlling the molecular weight of the resultant copolymer. The concentration of chain transfer agent is .05 to 0.5 grams/100 grams of the combined weight of the sulfonate containing monomer and the conjugated diene.

The free radical emulsion copolymerization of the water soluble sulfonate containing polymer and the conjugated diene yields a stable latex, wherein the resultant water insoluble copolymer is not covalently crosslinked and possesses substantial ionic crosslinking, and has 0.2 to 3 weight percent of chemically combined sulfur. The resultant latex can be coagulated by the addition of an aqueous salt solution to the emulsion at a volume ratio of the aqueous salt solution to total volume of the emulsion of 10 to 0.5. The water insoluble copolymer is recovered by filtration and subsequently washed with water and dried under vacuum conditions at about warm temperature. Alternatively, the copolymer can be coagulated by precipitation with alcohol such as methahol.

B. Plasticizers

The metal sulfonate containing copolymers at higher sulfonate levels can possess extremely high melt viscosities and are thereby difficult to process. The optional addition of ionic group (preferential) plasticizers markedly reduces melt viscosity and frequency enhances physical properties. To the neutralized sulfonated copolymer is added, in either solution or to the crumb of the sulfonated copolymer,

a preferential plasticizer consisting of carboxylic acids having 5 to 30 carbon atoms, per molecule, more preferably 8 to 22 carbon atoms per molecule, or basic salts of these carboxylic acids, wherein the metal ion of the basic salt is aluminium, ammonium, lead or Groups IA, IIA, IB or IIB of the Periodic Table of Elements or mixtures thereof. The carboxylic acids may be lauric, myristic, palmitic or stearic acids or mixtures thereof, e.g., zinc stearate, magnesium stearate, or zinc laurate.

The preferential plasticizer is incorporated into the neutralized sulfonated copolymer at 3 to 75 parts by weight based on 100 parts by weight of the neutralized sulfonated copolymer. Alternatively, other preferential plasticizers are selected from amines, amides such as stearamide, ammonium and amine salts of carboxylic acids and mixtures thereof. The preferred plasticizers are selected from carboxylic acids having 8 to 22 carbon atoms per molecule or metallic salts of these carboxylic acids or mixtures thereof. The resultant neutralized sulfonated copolymer with preferential plasticizer is isolated from the solution by conventional steam stripping and filtration.

C. Commercial tackifier resins

To the hot melt adhesive composition is added a commercial tackifying resin having a softening point of 0 to 160°C, more preferably 50 to 140°C and most preferably 70 to 120°C. A variety of commercial tackifier resins are available. Some of these resins contain γ and/or β pinene base polyterpene resins as the main ingredient while others are derived from the polymerization of petroleum or coal distillates which consist of aliphatic dienes, mono and di-olefins and cyclic olefins having about 5 to about 6 carbon atoms per molecule. The latter type of tackifiers have primarily piperlene and/or isoprene structure. A general but excellent description of tackifying resins derived from petroleum derivatives can be found in, for example, *Encyclopedia of Polymer Science and Technology*, Vol. *9*, Pages 853 and 860, chapter by John Findlay, published by John Wiley & Sons, NY (1968).

Typical but non-limiting tradenames of these commercial tackifiers are Wingtak of Goodyear, Escorex of Exxon, Piccolyte of Hercules and Zonrez of Arizona Chemicals. Recently these and various other companies have also started marketing relatively higher softening point resins. These are generally modified aliphatic hydrocarbon resins and/or hydrogenated polycyclics. The physical appearance of these commercial tackifying resins varies, depending upon their softening point, they can be either viscous liquid or light-colored solids at room temperature. Most often their initial color (Gardner) is 3.0 to 7.0 and the density from 0.7 to 1.0 gm/cm$^3$ at room temperature. The acid number of these resins is usually less than 1. In general, the molecular weight of these commercial tackifying resins is not homogeneous, and the number average molecular weight $\overline{M}n$ can be from 300 to 5000.

As well-known to this familiar with the use of tackifying resins, because of their wide range compatibility, any of them can be used with sulfonated polymers in proper formulation, which will yield adhesive systems of varying physical characteristics. To cite an example in the present invention, the tackifying resins used are those based on hydrocarbon resins.

These hydrocarbon tackifier resins are incorporated into the hot melt adhesive composition at 25 to 700, preferably at 25 to 200 parts by weight per 100 parts by weight of neutralized sulfonated copolymer.

D. Method of forming blend adhesive composition

The blend compositions of the neutralized sulfonated elastomeric copolymer with or without preferential plasticizer and the hydrocarbon tackifier resin can be formed by blending techniques well known in the art. For example, the blend composition of the hot melt adhesive can be compounded on a hot two-roll mill. Other methods known in the art which are suitable for making these compositions include those methods employed in the plastic and elastomer industries for mixing polymer systems. An excellent polymer blend composition of this invention can be obtained through the use of a high shear batch intensive mixer called the Banbury. Alternatively, economic advantages in terms of time and labor savings can be obtained through the use of a Farrel Continuous Mixer, a twin screw extruder, or tandem extrusion techniques which are continuous mixing types of equipment. The Banbury mixing device is the preferred batch type mixer, and the twin screw extruder is the preferred continuous mixer.

E. Extended blend adhesive composition

To the blend compositions of the hot melt adhesive compositions can be added fillers which are selected from ground calcium carbonate, water precipitated calcium carbonate, delaminated, calcined or hydrated clays, silicas, carbon blacks and mixtures thereof. These fillers are incorporated into the blend composition at 5 to 800 parts by weight per 100 parts by weight of the neutralized sulfonated copolymer. Typically, these fillers have a particle size of 0.03 to 20 microns, more preferably 0.3 to 10, and most preferably 0.5 to 10. the oil adsorption as measured by grams of oil adsorbed by 100 grams of filler is 10 to 100, more preferably 10 to 85 and most preferably 10 to 75. Typical fillers employed in this invention are illustrated in Table I.

TABLE I

| Filler | Code No. | Oil absorption grams of oil/100 grams of filler | Specific gravity | Avg. particle size micron | pH |
|---|---|---|---|---|---|
| Calcium Carbonate Ground | Atomite | 15 | 2.71 | | 9.3 |
| Calcium Carbonate Precipitated | Purecal U | 35 | 2.65 | .03—.04 | 9.3 |
| Delaminated Clay | Polyfil DL | 30 | 2.61 | 4.5 | 6.5—7.5 |
| Hydrated Clay | Suprex | | 2.6 | 2 | 4.0 |
| Calcined Clay | Icecap K | 50—55 | 2.63 | 1 | 5.0—6.0 |
| Magnesium Silicate | Mistron Vapor | 60—70 | 2.75 | 2 | 9.0—7.5 |

F. Oil extended adhesive compositions

It is observed that the blend composition of the present invention can also include oils further to improve low temperature properties and tack characteristics of the resulting adhesive. Levels of oil of 1 to 100 parts by weight per 100 parts of the neutralized sulfonated copolymer can be incorporated. Oils are particularly useful when high levels of petroleum resin tackifiers are used since such materials can harden the resulting composition. Oils can further soften and reduce the cost. Typical oils that can be used may be low viscosity aromatic, naphthenic or paraffin petroleum oils. Typical oils are illustrated in Table II.

G. In addition other polymers can be incorporated into the compositions of this invention such as polyisobutylene, ethylene propylene copolymer or ethylene propylene diene terpolymer, ethylene vinyl acetate copolymers, natural rubber, polyisoprene, cis 1,2 polybutadiene, 1,4 polybutadiene and similar polymers which are largely elastomeric and are reasonably compatible with the sulfonate copolymers or terpolymers of this invention as long as the added polymer does not constitute more than 90 parts by weight per 100 parts of sulfonate containing copolymer which is the primary ingredient of this invention.

TABLE II

| Type oil | Oil code No. | Viscosity ssu | $M_n$ | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | — | 1.3 | 70.3 | 28.4 |
| Naphthenic | Flexon 765 | 505 | — | 0.9 | 20.8 | 78.3 |

H. Method of fabrication of adhesive compositions

Because of the significant advances in the packaging technology, the hot melt adhesive compositions can be used by conventional polymer fabricating techniques. After the blending is complete, the adhesive mass can either be extruded and/or calendered to a uniform thickness on top of the substrate which could be paper, cloth, aluminum foil or glass fabric. The temperature and the through put of the extrusion are variable depending upon the viscosity of the tackifying mass and the desired coating thickness. Typically the temperature of extrusions and rolls may be from 93° to 204°C (200° to 400°F). The substrates or backings to which the pressure sensitive adhesive compositions are applied may be of various porous or nonporous types and they may be organic or inorganic in nature. Most generally, these materials are those which are customarily employed in pressure sensitive tapes, either the cloth or paper backed types or tape backings made of synthetic materials, for example, polyesters such as the copolymer of ethylene glycol with terephthalic acid, vinyls such as a copolymer of vinylidene chloride and vinyl chloride, or a copolymer of vinylidene chloride with acrylonitrile, cellophane, cellulose acetate, polyvinyl chloride, polyvinyl acetate, polypropylene, polyethylene, ethylene-propylene plastic copolymer. Sheetings and tapes of cloth or textiles of either natural or synthetic fiber origin, such as glass fiber cloth, wood, and finally sheets or strips of metals such as steel, copper, aluminum and alloys thereof can also be employed. In general, the backings employed are those which have heretofore been conventionally employed in preparing pressure

sensitive labels, tapes, sheetings and the like and the selection of any particular substrate material is not a specific novel feature of the present invention.

The advantages of the hot melt adhesive compositions of the present invention can be more readily appreciated by reference to the following Examples and tables. Unless otherwise specified, all measurements are in parts per hundred by weight.

The peel strength values were obtained by a method similar to ASTM D-429 adhesion test. In brief, the samples were sandwiched between mylar sheets and pressed to a thickness of about 25 mils (0.6 mm) using a hot press. Rectangular strips of 12.7 mm (1/2") width and 76.2 mm (3") long were cut and 90° peel tests were performed on an Instron at room temperature. The resin free sections of the mylar film were clamped into air jaws to avoid any slippage during pulling. The samples were pulled at 127 mm/min. (5"/min.) crosshead speed. The force and elongation of the samples were recorded on a strip recorder. The force necessary to separate the mylar sheets was taken as the peel strength of the blend. The initial peak values are reported in the fifth column of Table IV.

The following preparations describe the synthesis of an isoprene/sodium styrene sulfonate copolymer and a butadiene/sodium styrene sulfonate copolymer.

Example 1

A copolymer of sodium styrene sulfonate and butadiene was prepared. The following were charged into a polymerization vessel:

| | |
|---|---|
| water (distilled) | 200 parts |
| Tween 80 | 9.2 parts |
| Sodium Pyrophosphate | 1.2 parts |
| Triethylenetetramine (25% solution) | 8.0 parts |
| Piisopropylbenzene Hydroperoxide (25% solution) | 8.0 parts |
| Sodium Styrene Sulfonate | 8.0 parts |
| Butadiene | 77.3 parts |
| 1-Dodecanethiol (14% solution) | 4.0 parts |

The polymerization was conducted at a temperature of 20°C for 20 hours. At that time 12 ml of methanolic solution containing 0.8% hydroquinone and 1.2% ditertiary butyl phenol was added to the latex. The resulting product was precipitated in methanol.

The copolymer was gel-free and contained 0.46 percent chemically combined sulfur, had a reduced viscosity measured in a mixed solvent of 95% toluene at 5% methanol of 1.7, and had at least 80% by wt. of butadiene.

Example 2

A copolymer of sodium styrene sulfonate and butadiene was prepared as described in Example 1. The product contained 0.49% chemically combined sulfur was fully soluble in a mixed solvent of 95% toluene at 5% methanol, and had at least 80% by wt. of butadiene.

Example 3

A copolymer of sodium styrene sulfonate and isoprene was prepared. The following were charged into a polymerization vessel:

| | |
|---|---|
| Water (distilled) | 1958 parts |
| Sodium Lauryl Sulfate (30% solution) | 117.3 parts |
| Sodium Pyrophosphate ($Na_4P_2O_7 \cdot 10H_2O$) | 8.6 parts |
| Ammonium Ferrous Sulfate ($(NH_4)_2Fe(SO_4)_2 \cdot 6H_2O$) | 8.6 parts |
| Sodium Styrene Sulfonate | 96 parts |
| 1-Dodecanethiol | 4.5 parts |
| Benzoylperoxide (70% in water) | 5.0 parts |
| Isoprene | 912 parts |

The polymerization was conducted at a temperature of 22 to 25°C for about 24 hours. At that time a solution of methanol (80 parts containing about 9.4 parts of ditertiary butyl phenol and 0.6 parts of hydroquinone) was added to the latex. The resulting product was precipitated into methanol saturated with sodium chloride and the resulting precipitate filtered two times with water.

The product was a tacky, elastic solid, containing 1.3% chemically combined sulfur, had a reduced viscosity of 0.7 dl/g in a mixed solvent of 95% xylene and 5% methanol, and had at least 80% by weight of conjugated diene.

Example 4

A copolymer of sodium styrene sulfonate and isoprene was prepared as described in Example 3 with the exception that the reaction was stopped after 10 hours. The copolymer contained 0.38% chemically combined sulfur, was gel-free as demonstrated by its solubility in a mixed solvent of 95% toluene and 5% methanol, and had at least 80% by weight of conjugated diene. A thin film compression molded at 180°C had the following tensile properties: modulus at 100% elongation=$2.34\times10^5 N/m^2$ (34 psi), ultimate strength=$5.45\times10^5 N/m^2$ (79 psi), and ultimate elongation=620%.

Example 5

The four products of the previous examples were melt blended with commercial petroleum tackifier resins commonly employed in the adhesive industry. Two such resins are known by their tradenames as Escorez 2101 (marketed by Exxon Chemical Corporation) and Wingtak Plus (marketed by Goodyear). These solid resins soften at temperatures of 60 to 100°C, are low molecular weight polymers of about 1000 number average obtained by the copolymerization of aliphatic dienes, monoolefins and cyclicolefins. These materials were blended with the sulfonate copolymers on a hot two-roll mill incorporating some Irganox 2246 as a protective antioxidant. The resulting blends were very tacky at elevated temperatures, and remained so at ambient temperatures. To test the peel strength of these blends they were compression molded between sheets of oriental polyester film (Mylar) with the final thickness of the adhesive being about 0.6 mm (25 mil). In all cases the blends appeared clear indicating excellent homogeneity and compatibility. The blends and their respective properties are shown in Tables III and IV.

TABLE III

Compositions of blends of sulfonated copolymers with petroleum resins

| Example No. and description | 3—1 | 3—2 | 3—3 | 3—4 | 3—5 |
|---|---|---|---|---|---|
| Ex. 1—Sulfonated Styrene-Butadiene | 50 | — | — | — | — |
| Ex. 2—Sulfonated Styrene-Butadiene Copolymer | — | 50 | — | 50 | — |
| Ex. 3—Sulfonated Styrene-Isoprene Copolymer | — | — | 50 | — | — |
| Ex. 4—Sulfonated Styrene-Isoprene Copolymer | — | — | — | — | 50 |
| Wingtak Plus | 50 | 50 | 50 | — | 50 |
| Escorez 2101 | — | — | — | 50 | — |
| Irganox 2246 (Antioxidant) | 2 | 2 | 2 | 2 | 2 |

TABLE IV
Properties of the blends of sulfonated copolymers with petroleum resins

| Blend No. | Green strength | Tackiness | Clarity* | Peel strength pound-force | N force |
|---|---|---|---|---|---|
| 3—1 | Medium | Slightly Tacky | Clear | 0.5 | 2.22 |
| 3—2 | High | Tacky | Clear | 1.8 | 8.00 |
| 3—3 | Medium | Very Tacky | Clear | 1.6 | 7.12 |
| 3—4 | High | Tacky | Clear | 1.6 | 7.12 |
| 3—5 | Medium | Tacky | Clear | 4.4 | 19.57 |

*Appearance of compression molded pads of about 0.6 mm (25 mil) thickness.

It is evident from the data in Table IV that these compositions even in unoptimized form possess a high level of tack clarity, and peel strength. Such systems offer a balance of adhesive properties which appear quite different from others described in the prior art.

It is also contemplated that the compositions described in the present invention can be deposited by solvent casting from suitable solvent systems. Due to the strong ionic associations prevalent with these sulfonated ionomers, suitable solvents must be selected with care. Often solvent mixtures comprising a hydrocarbon and a low level of a polar cosolvent can be employed such as 5 to 10% by volume of a volatile alcohol.

**Claims**

1. An adhesive composition which comprises:

(a) a water-insoluble neutralized sulfonate containing copolymer having 0.2 to 3 weight percent of chemically combined sulfur wherein said neutralized sulfonated copolymer comprises at least 80% by weight of at least one conjugated diene having from 4 to 20 carbon atoms per molecule and a minor proportion of a metal or amine neutralized sulfonate monomer characterized by the formula:

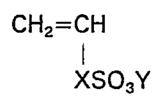

where X is $(CH_2)_n$ or aromatic, wherein n=0, 1, 2, 3 or 4, and Y is a cation selected from Groups IA, IIA, IB and IIB of the Periodic Table or an amine of the formula:

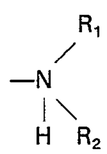

where $R_1$ and $R_2$ are the same or different $C_1$ to $C_{12}$ aliphatic groups, or hydrogen; and

(b) 25 to 700, preferably 25 to 200 parts by weight of a hydrocarbon tackifying resin, preferably derived from a petroleum or coal tar distillate, per 100 parts by weight of said sulfonate containing copolymer.

2. A composition according to claim 1, wherein said sulfonate containing monomer is a metal neutralized sulfonated styrene.

3. A composition according to claim 1 or 2, wherein said conjugated diene is 1,3-butadiene, isoprene, chloroprene or a mixture thereof.

4. A composition according to claim 3, wherein said conjugated diene is isoprene.

5. A composition according to claim 3, wherein said conjugated diene is 1,3-butadiene.

6. A composition according to any preceding claim, further including 3 to 75 parts by weight of an ionic preferential plasticizer per 100 parts by weight of said neutralized sulfonated copolymer, wherein said preferential plasticizer is a carboxylic acid having 8 to 22 carbon atoms per molecule, a metallic salt of said carboxylic acid, an amide having an aliphatic group of 8 to 22 carbon atoms, an amine, a urea, a thiourea or a mixture thereof.

7. A composition according to claim 6, wherein said preferential plasticizer is zinc stearate.

8. A composition according to any preceding claim, further including 5 to 800 parts by weight of a filler per 100 parts by weight of the sulfonated containing copolymer, said filler being calcium carbonate, silica, a carbon black, a clay, a talc or a mixture thereof and/or less than 100 parts by weight of an oil having less than 2 wt.% polars per 100 parts by weight of the sulfonated copolymer.

9. A composition according to claim 8, further including from 1 to 100 parts by weight per 100 parts by weight of the neutralized sulfonated copolymer of an oil said oil being an aromatic, naphthenic or paraffinic basestock.

10. An adhesive composition according to any preceding claim, further including a solvent.

**Patentansprüche**

1. Klebstoffzusammensetzung gekennzeichnet durch:

(a) ein ein wasserlösliches, neutralisiertes Sulfonat enthaltendes Copolymer mit 0,2 bis 3 Gew.% chemisch gebundenem Schwefel, wobei das neutralisierte sulfonierte Copolymer mindestens 80 Gew.% mindestens eines konjugierten Diens mit 4 bis 10 Kohlenstoffatomen je Molekül und einen geringeren Anteil eines metall- oder amin neutralisierten Sulfonatmonomeren enthält, das gekennzeichnet ist durch die Formel:

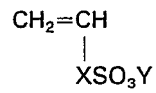

in der X $(CH_2)_n$ mit n=0, 1, 2, 3 oder 4 oder aromatisch ist und Y ein Kation ausgewählt aus den Gruppen IA, IIA, IB und IIB des periodischen Systems der Elemente oder ein Amin mit der Formel

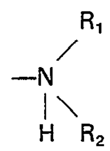

ist, in der $R_1$ und $R_2$ die gleichen oder verschiedene aliphatische $C_1$—$C_{12}$-Gruppen oder Wasserstoff sind; und

(b) 25 bis 700 Gewichtsteile, vorzugsweise 25 bis 200 Gewichtsteile eines Kohlenwasserstoff-Klebrigmacherharzes, vorzugsweise hergestellt aus einem Erdöl- oder Kohleteerdestillat, je 100 Gewichtsteile des Sulfonat enthaltenden Copolymeren.

2. Zusammensetzung nach Anspruch 1, dadurch gekennzeichnet, daß das Sulfonat enthaltende Monomer ein metallneutralisiertes sulfoniertes Styrol ist.

3. Zusammensetzung nach Anspruch 1 oder 2, dadurch gekennzeichnet, daß das konjugierte Dien 1,3-Butadien, Isopren, Chloropren oder eine Mischung derselben ist.

4. Zusammensetzung nach Anspruch 3, dadurch gekennzeichnet, daß das konjugierte Dien Isopren ist.

5. Zusammensetzung nach Anspruch 3, dadurch gekennzeichnet, daß das konjugierte Dien 1,3-Butadien ist.

6. Zusammensetzung nach einem der vorangehenden Ansprüche, dadurch gekennzeichnet, daß sie zusätzlich 3 bis 75 Gewichtsteile eines ionischen bevorzugten Weichmachers je 100 Gewichtsteile des neutralisierten sulfonierten Copolymeren enthält, wobei der bevorzugte Weichmacher eine Carbonsäure mit 8 bis 22 Kohlenstoffatomen je Molekül, ein Metallsalz dieser Carbonsäure, ein Amid mit einer aliphatischen Gruppe mit 8 bis 22 Kohlenstoffatomen, ein Amin, ein Harnstoff, ein Thioharnstoff oder eine Mischung derselben ist.

7. Zusammensetzung nach Anspruch 6, dadurch gekennzeichnet, daß der bevorzugte Weichmacher Zinkstearat ist.

8. Zusammensetzung nach einem der vorangehenden Ansprüche, dadurch gekennzeichnet, daß sie zusätzlich 5 bis 800 Gewichtsteile eines Füllstoffes je 100 Gewichtsteile des sulfonierten Copolymeren, wobei der Füllstoff Calciumcarbonat, Siliciumdioxid, Ruß, Ton, Talk oder eine Mischung derselben ist, und/oder weniger als 100 Gewichtsteile eines Öls mit weniger als 2 Gew.% polaren Bestandteilen je 100 Gewichtsteile des sulfonierten Copolymeren enthält.

9. Zusammensetzung nach Anspruch 8, dadurch gekennzeichnet, daß sie zusätzlich 1 bis 100 Gewichtsteile eines Öls je 100 Gewichtsteile des neutralisierten sulfonierten Copolymeren enthält, wobei das Öl aromatisch, naphthenisch oder paraffinisch ist.

10. Klebstoffzusammensetzung nach einem der vorangehenden Ansprüche, dadurch gekennzeichnet, daß sie zusätzlich ein Lösungsmittel enthält.

**Revendications**

1. Composition adhésive, qui comprend:

(a) un copolymère hydrosoluble, contenant des groupes sulfonates neutralisés, comportant 0,2 à 3% en poids de soufre chimiquement combiné, dans lequel ledit copolymère à groupes sulfonates neutralisés comprend au moins 80% en poids d'au moins un diène conjugué ayant 4 à 10 atomes de carbone per molécule et une proportion mineure d'un monomère à groupe sulfonate neutralisé par un métal ou par une amine, caractérisé par la formule:

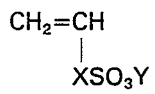

dans laquelle X représente $(CH_2)_n$, n étant égal à 0, 1, 2, 3 ou 4, ou est un groupe aromatique, et Y est un cation choisi dans les groupes IA, IIA, IB et IIB du Tableau Périodique ou une amine de formule:

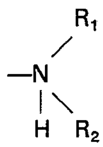

dans laquelle $R_1$ et $R_2$ sont des groupes aliphatiques, identiques ou différents, en $C_1$ à $C_{12}$, ou des atomes d'hydrogène; et

(b) 25 à 700 parties en poids, de préférence 25 à 200 parties en poids, d'une résine hydrocarbonée de pégosité, provenant de préférence d'un distillat de pétrole ou de goudron de houille, pour 100 parties en poids dudit copolymère contenant des groupes sulfonates.

2. Composition selon la revendication 1, dans laquelle ledit monomère contenant un groupe sulfonate est un styrène sulfoné neutralisé par un métal.

3. Composition selon la revendication 1 ou 2, dans laquelle ledit diène conjugué est le 1,3-butadiène, l'isoprène, le chloroprène ou un de leurs mélanges.

4. Composition selon la revendication 3, dans laquelle ledit diène conjugué est l'isoprène.

5. Composition selon la revendication 3, dans laquelle ledit diène conjugué est le 1,3-butadiène.

6. Composition selon l'une quelconque des revendications précédentes, comprenant en outre 3 à 75 parties en poids d'un plastifiant préférentiel ionique pour 100 parties en poids dudit copolymère sulfoné neutralisé, dans laquelle ledit plastifiant préférentiel est un acide carboxylique ayant 8 à 22 atomes de carbone par molécule, un sel de métal dudit acide carboxylique, un amide ayant un groupe aliphatique de 8 à 22 atomes de carbone, une amine, une urée, une thiourée ou un de leurs mélanges.

7. Composition selon la revendication 6, dans laquelle ledit plastifiant préférentiel est le stéarate de zinc.

8. Composition selon l'une quelconque des revendications précédentes, comprenant en outre de 5 à 800 parties en poids d'une charge pour 100 parties en poids du copolymère contenant des groupes sulfonés ladite charge étant du carbonate de calcium, de la silice, un noir de carbone, une argile, un talc ou un de leurs mélanges et/ou moins de 100 parties en poids d'une huile ayant moins de 2% en poids de matières polaires pour 100 parties en poids du copolymère sulfoné.

9. Composition selon la revendication 8, comprenant en outre 1 à 100 parties en poids, pour 100 parties en poids du copolymère sulfoné neutralisé, d'une huile, ladite huile étant une huile de base aromatique, naphténique ou paraffinique.

10. Composition adhésive selon l'une quelconque des revendications précédentes, comprenant en outre un solvant.